# EUROPEAN PATENT SPECIFICATION

(11) **EP 4 376 178 B1**
(45) Date of publication and mention of the grant of the patent: **29.04.2026**
(21) Application number: 22944044.1
(22) Date of filing: 27.12.2022
(51) Int. Cl.: H01M 50/15, H01M 50/148, H01M 50/291, H01M 50/553, H01M 50/289, H01M 50/531, H01M 50/55, H01M 50/627, H01M 50/103

(54) **BOTTOM PLASTIC AND BATTERY HAVING SAME**
BODENKUNSTSTOFF UND BATTERIE DAMIT
MATIÈRE PLASTIQUE DE FOND ET BATTERIE LA COMPRENANT

(30) Priority: 27.09.2022 CN 202211184994
(43) Date of publication of application: 29.05.2024
(73) Proprietor: Hithium Tech HK Limited, Hong Kong (HK)
(72) Inventor: LIANG, Jinyun, Xiamen, Fujian 361100 (CN); XU, Weidong, Xiamen, Fujian 361100 (CN)
(74) Representative: Manitz Finsterwald Patent- und Rechtsanwaltspartnerschaft mbB
(86) International application number: PCT/CN2022/142431
(87) International publication number: WO 2024/066099

(56) References cited:
- CN-A- 114 497 836
- CN-A- 114 512 748
- CN-U- 214 153 028
- CN-U- 215 451 569
- JP-A- 2004 079 330
- JP-A- 2011 204 469
- US-A1- 2019 237 743
- US-A1- 2020 295 317
- US-A1- 2021 119 287

## Description

### RELATED APPLICATIONS

The present application is based on and claims priority to Chinese Patent Application No. 2022111849948, filed on September 27, 2022 and entitled with "PLASTIC COMPONENT AND BATTERY HAVING THE SAME".

### FIELD

The present disclosure relates to the field of battery technologies, and in particular, to a plastic component and a battery having the same.

### BACKGROUND

At present, a plastic component is molded by using injection technology in a molding cavity, with a speed of molding closely related to a thickness of the plastic component. When producing a larger-sized plastic component, a thick plastic component is needed to ensure its strength. However, this results in slower injection molding efficiency or even failure of molding of the plastic component. Additionally, for batteries, excessive hydraulic pressure during short-term injection can easily lead to damage to a bare cell. Moreover, after a connection piece is connected to the plastic component, an overall thickness of the connection piece and the plastic component is great. US 2021/119287 A1 discloses a secondary battery, a battery module and an electric vehicle. US 2020/295317 A1 discloses a secondary battery, a battery module and a vehicle. CN 214 153 028 U discloses a top cover assembly, a battery cell, a battery and a vehicle. US 2019/237743A1 discloses a cap assembly and a power battery. JP 2011 204469 A discloses a rectangular sealed secondary battery. CN 114 497 836 A discloses a full-tab top cover assembly and a full-tab battery. CN 114 512 748 A discloses a full-tab top cover assembly and a full-tab battery. CN 215 451 569 U discloses a battery top cover and a battery cell.

### SUMMARY

The present disclosure is directed to at least solving one of the technical problems in the prior art to some extent. For this reason, the present disclosure proposes a plastic component with a small thickness. The present invention is set out in the appended claims.

The present disclosure further proposes a battery having the same.

The plastic component according to embodiments of the present disclosure includes a body having a first side surface and a second side surface facing away from the first side surface. The first side surface has a buffer recess recessed towards the second side surface, the buffer recess has at least one flow guide hole penetrating the body in a thickness direction of the body, the second side surface has at least one connection piece recess recessed towards the first side surface. Each of the at least one connection piece recess is configured such that a connection piece of a battery can be at least partially installed and positioned in the connection piece recess, and the connection piece is connectable to a pole of the battery and at least one bare cell of the battery. The connection piece recess has a pole through hole penetrating the body in the thickness direction of the body. Projection regions of the connection piece recess and the buffer recess on the body are offset from each other. An offset between the projection region of the connection piece recess on the body and the projection region of the buffer recess on the body is greater than 0.7 mm and smaller than 1 mm.

For the plastic component according to the embodiments of the present disclosure, by defining the buffer recess at the first side surface of the body, it is possible to buffer electrolyte and prevent excessive injection pressure from damaging a bare cell inside a battery casing. Moreover, a material of the body can be reduced. By defining the connection piece recess at the second side surface, it is possible to decrease an overall thickness of the connection piece and the plastic component, and further reduce the material of the body. Consequently, a material required for molding the plastic component and a cooling time required for injection molding are saved, resulting in significant cost savings.

According to some embodiments of the present disclosure, the second side surface has two connection piece recesses located at two ends of the buffer recess, respectively.

According to some embodiments of the present disclosure, the first side surface is connected to the second side surface through an outer peripheral surface, and the second side surface has a thinned recess having an outer peripheral recess wall and a recess bottom wall. The outer peripheral recess wall is apart from the outer peripheral surface, and the connection piece recess is formed at the recess bottom wall.

According to some embodiments of the present disclosure, a distance between the outer peripheral recess wall and the outer peripheral surface is smaller than or equal to 10 mm.

According to some embodiments of the present disclosure, the connection piece recess is provided with a positioning protruding post protruding away from the first side surface. The positioning protruding post has an end surface flush with the recess bottom wall of the thinned recess.

According to some embodiments of the present disclosure, the body is of a flat plate-like structure and has a length greater than or equal to 300 mm, a width greater than or equal to 107 mm, and a thickness greater than or equal to 4 mm.

According to some embodiments of the present disclosure, the thickness of the body is smaller than or equal to 30 mm.

According to some embodiments of the present disclosure, a length of the buffer recess has a length greater than or equal to 285 mm, a width greater than or equal to 100 mm, and a depth greater than or equal to 2.5 mm.

According to some embodiments of the present disclosure, a dimension of the connection piece recess in a length direction of the body is greater than or equal to 50 mm, a dimension of the connection piece recess in a width direction of the body is greater than or equal to 86 mm, and a depth of the connection piece recess is greater than or equal to 2.5 mm.

According to some embodiments of the present disclosure, the connection piece recess has a rounded corner arranged at a side of the connection piece recess close to the buffer recess. A fillet radius of the rounded corner is greater than 5 mm and smaller than 20 mm.

According to some embodiments of the present disclosure, the pole through hole is located at a center of the body in a width direction of the body.

According to some embodiments of the present disclosure, the connection piece recess has a first side wall close to the buffer recess and a second side wall away from the buffer recess. A distance between the pole through hole and the second side wall is greater than a distance between the pole through hole and the first side wall.

A battery according to another aspect of the embodiments of the present disclosure includes the plastic component according to the above embodiments of the present disclosure.

For the battery according to the embodiments of the present disclosure, the plastic component included by the battery resolves technical barriers associated with injection molding difficulties caused by excessive thickness in the large-sized plastic component. Moreover, mechanical structures of the plastic component like the buffer recess and the connection piece recess are provided at a plurality of positions of the plastic component, thereby allowing feasibility of the large-sized plastic component to be realized. In addition, the thinned design of the buffer recess and the connection piece recess saves the materials required for molding the plastic component and cooling time required for injection molding, thus lowering most of the cost. Moreover, the buffer recess is added on the plastic component to serve as an electrolyte buffer region, which addresses a technical challenge of bare cell damage due to excessive hydraulic pressure during rapid infusion in a large-sized battery cell.

According to some embodiments of the present disclosure, the battery further includes a cover plate. The cover plate is located at a side of a first side surface of the plastic component and has a liquid injection hole. A projection of the liquid injection hole on the first side surface is located in a buffer recess, and a flow guide hole is offset from the liquid injection hole.

According to some embodiments of the present disclosure, the battery further includes a connection piece and a pole. The pole passes through the pole through hole. The connection piece is located at a side of a second side surface of the plastic component and includes a pole connection segment and a tab connection segment connected to the pole connection segment. The pole connection segment is located at a connection piece recess and fixedly connected to the pole. The tab connection segment extends away from the plastic component, and an angle between the tab connection segment and the pole connection segment is greater than 70° and smaller than 110°.

According to some embodiments of the present disclosure, the battery further includes at least one bare cell provided at a side of the pole connection segment facing away from the plastic component. A longitudinal extending direction of the bare cell is consistent with a length direction of the body, a longitudinal end of the bare cell is a tab, and the tab is connected to the tab connection segment.

According to some embodiments of the present disclosure, the bare cell has a protrusion protruding towards the plastic component. The protrusion includes a proximal portion close to the plastic component and a distal portion away from the plastic component, a distance between the distal portion and the plastic component is greater than the distance between the proximal portion and the plastic component, and a projection of the flow guide hole on the protrusion is located at the distal portion, or a flow guide hole is offset from the protrusion.

According to some embodiments of the present disclosure, the buffer recess internally has a plurality of flow guide holes penetrating the body in a thickness direction of the body. Two sides of the proximal portion have the plurality of flow guide holes.

According to some embodiments of the present disclosure, the battery includes a plurality of bare cells. A flow guide hole is located at a center line between two adjacent bare cells.

The additional aspects and the advantages of the present disclosure will be partially set forth in the following description, and in part will be apparent from the following description, or may be learned by practice of the present disclosure.

### BRIEF DESCRIPTION OF THE DRAWINGS

FIG. 1 is a perspective view of a plastic component from a perspective according to an embodiment of the present disclosure.
FIG. 2 is a perspective view of a plastic component from another perspective according to an embodiment of the present disclosure.
FIG. 3 is a top view of a plastic component according to an embodiment of the present disclosure.
FIG. 4 is a cross-sectional view of A-A in FIG. 3.
FIG. 5 is a schematic view of a thickness of a body, a depth of a buffer recess, and a depth of a connection piece recess.
FIG. 6 is a bottom view of a plastic component according to an embodiment of the present disclosure.
FIG. 7 is a schematic view of a thinned recess of a plastic component according to an embodiment of the present disclosure.
FIG. 8 is a bottom view of a plastic component according to another embodiment of the present disclosure.
FIG. 9 is a perspective view of a connection piece.
FIG. 10 is a schematic view of an assembly of a cover plate, a plastic component, a connection piece, and a bare cell.
FIG. 11 is a schematic view of a relative position between a bare cell and a plastic component.

Reference Signs:
plastic component 10; first side surface 1; buffer recess 11; flow guide hole 12; second side surface 2; connection piece recess 21; rounded corner 211; positioning protruding post 212; thinned recess 22; outer peripheral recess wall 221; recess bottom wall 222; outer peripheral surface 3; pole through hole 4; cover plate 20; liquid injection hole 201; connection piece 30; pole connection segment 301; tab connection segment 302; bare cell 40; tab 401; protrusion 402; proximal portion 4021; and distal portion 4022.

### DETAILED DESCRIPTION

Embodiments of the present disclosure will be described in detail below, and examples of the embodiments are shown in the accompanying drawings, in which identical or similar reference signs denote identical or similar elements or elements with identical or similar functions through the accompanying drawings. The following embodiments described with reference to the drawings are illustrative and intended to explain the present disclosure, rather than being interpreted as limitations on the present disclosure.

In description of the present disclosure, it should be understood that orientations or positional relationships indicated by terms "longitudinal", "transverse", "length", "width", "thickness", "upper", "lower", "front", "rear", "left", "right", "vertical", "horizontal", "top", "bottom", "inner", "outer", and the like are based on orientations or positional relationships shown in the drawings, and facilitate the description of the present disclosure and simplify the description merely, rather than indicating or implying that the associated apparatus or element must have specific orientations and are constructed and operated in the specific orientations, and thus should not be construed to limit the present disclosure.

Moreover, the terms "first" and "second" are used only for description and shall not be interpreted as an indication or implication of relative importance or an implicit indication of the number of technical features. Thus, features associated with "first" and "second" may include at least one or more such features, either explicitly or implicitly. In the description of the present disclosure, "a plurality of" means two or more, unless otherwise specifically defined.

In the present disclosure, unless otherwise specifically stated and defined, terms "mounted", "connect", "connect to", "fixed", and the like should be understood broadly. For example, it may be a fixed connection or detachable connection or integrally formed; it may be a mechanical connection, an electric connection, or a communication; it may be a direct connection, an indirect connection through an intermediary, or a communication between the interiors of two elements or mutual acting relationship between the two elements. For those skilled in the art, the specific meaning of the above-mentioned terms in the embodiments of the present disclosure can be understood according to specific circumstances.

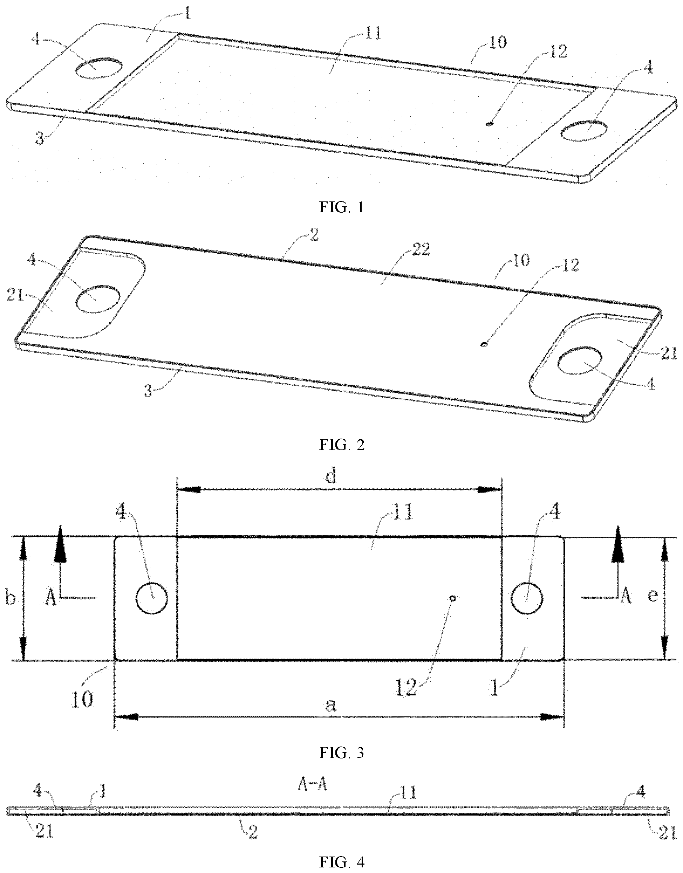

A plastic component 10 according to embodiments of the present disclosure will be described in detail with reference to FIG. 1 to FIG. 11. The plastic component 10 may be used in a battery. The battery includes a housing and a battery top cover. The housing has a receiving space, and the receiving space is provided with a battery cell. The battery top cover is used for sealing an opening of the receiving space. In some embodiments, the plastic component 10 may be formed as a part of the battery top cover.

Referring to FIG. 1 to FIG. 6, the plastic component 10 according to an embodiment of the present disclosure includes a body having a first side surface 1 and a second side surface 2 facing away from the first side surface 1. In some embodiments, in FIG. 1, an upper surface of the body is the first side surface 1, and a lower surface of the body is the second side surface 2.

The first side surface 1 has a buffer recess 11, and the buffer recess 11 is recessed towards a direction where the second side surface 2 is located. As illustrated in FIG. 1, the buffer recess 11 is recessed downwards. The buffer recess 11 has a flow guide hole 12, and the flow guide hole 12 penetrates the body in a thickness direction of the body. When the plastic component 10 is applied in the battery, an operation of injecting liquid into the battery may be completed through the flow guide hole 12. The buffer recess 11 is used as a buffer region of electrolyte, which may effectively prevent over-sized liquid injection pressure from damaging the bare cell in a battery casing. Moreover, it is possible to balance air pressure in the battery cell. At least one flow guide hole 12 is provided. A recessed structure of the buffer recess 11 also enhances a mechanical strength of a liquid injection region of the body to some extent.

In some embodiments of the present disclosure, one flow guide hole 12 is provided, thereby facilitating simplification of processing process of the plastic component 10. Moreover, a liquid injection process is easy to manage when a number of the flow guide holes 12 is small.

In some embodiments of the present disclosure, a plurality of flow guide holes 12 is provided, thereby facilitating an improvement in liquid injection efficiency.

The second side surface 2 has a connection piece recess 21, and the connection piece recess 21 is recessed towards a direction where the first side surface 1 is located. When the plastic component 10 is applied in the battery, a connection piece may be at least partially installed and positioned in the connection piece recess 21, thereby facilitating a reduction in an overall thickness of the connection piece after the connection piece is connected to the plastic component 10. In addition, a recessed structure of the connection piece recess 21 strengthens a mechanical strength of a connection piece region of the body to some extent.

Referring to FIG. 1 to FIG. 6, a pole through hole 4 is formed at the connection piece recess 21 and penetrates the body in the thickness direction of the body. The pole through hole 4 is used for a pole to pass through, and the connection piece is welded and fixed to the pole.

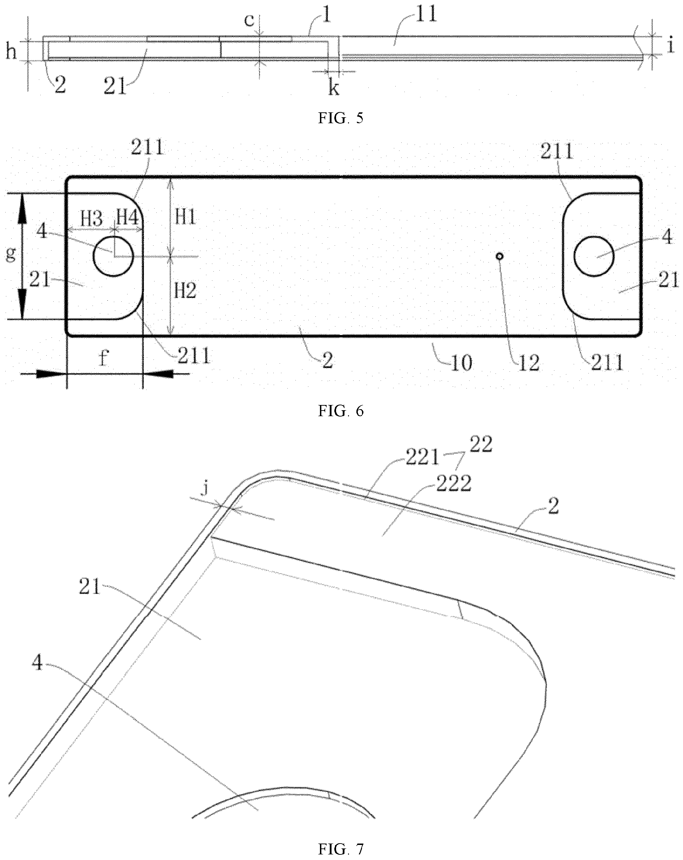

In some embodiments of the present disclosure, referring to FIG. 6, the pole through hole 4 is located at a center of the body in a width direction of the body, i.e., H1=H2. In this way, a structure of the plastic component 10 is an axisymmetric structure. When the plastic component 10 is installed in the battery, the plastic component 10 has no directivity. Moreover, even if the plastic component 10 is horizontally rotated by 180°, the plastic component 10 is still viable, thereby facilitating saving an assembly time.

In some embodiments of the present disclosure, referring to FIG. 6, the connection piece recess 21 has a first side wall close to the buffer recess 11 and a second side wall away from the buffer recess 11. A distance between the pole through hole 4 and the second side wall is greater than a distance between the pole through hole 4 and the first side wall. It may be noted that "the distance between the pole through hole 4 and the second side wall" refers to a distance between a center of the pole through hole 4 and the second side wall, "the distance between the center of the pole through hole 4 and the first side wall" refers to a distance between the center of the pole through hole 4 and the first side wall, and the distance between the center of the pole through hole 4 and the second side wall is greater than the distance between the center of the pole through hole 4 and the first side wall, i.e., H3 >H4. In this way, the center of the pole through hole 4 is far away from an edge of the body, which may reduce a hole cracking risk at the pole through hole 4.

In the plastic component 10 according to the embodiments of the present disclosure, the buffer recess 11 is formed at the first side surface 1 of the body, so that the electrolyte may be buffered, and the bare cell in the battery casing may be prevented from being damaged due to excessive liquid injection pressure. Moreover, a material of the body may be decreased. By defining the connection piece recess 21 at the second side surface 2, it is possible to lower the overall thickness of the connection piece after being connected to the plastic component 10 and further reduce the material of the body. Therefore, the material required for forming the plastic component 10 and the time required for injection molding cooling are saved, and the cost is greatly saved.

In some embodiments of the present disclosure, projection regions of the connection piece recess 21 and the buffer recess 11 on the body are offset from each other. In this way, the thickness of the body is not excessively reduced, which helps keep the body higher in strength.

According to some embodiments of the present disclosure, an offset between the projection region of the connection piece recess 21 on the body and the projection region of the buffer recess 11 on the body is greater than 0.7 mm and smaller than 1 mm. In other words, the offset between the projection region of the connection piece recess 21 on the body and the projection region of the buffer recess 11 on the body is in a range of 0.7 mm to 1 mm. As illustrated in FIG. 5, the offset between the projection region of the connection piece recess 21 on the body and the projection region of the buffer recess 11 on the body is k, and K is greater than or equal to 0.7 mm and smaller than or equal to 1 mm. When k is smaller than 0.7 mm, a connection strength between the connection piece recess 21 and the buffer recess 11 is small, and the body is easy to crack in a region between the connection piece recess 21 and the buffer recess 11; and when k is greater than 1 mm, it will result in significant fluctuations in the thickness of the body, consequently leading to an increased level of injection molding difficulty and a decreased success rate of injection molding. Exemplarily, k may be 0.7 mm, 0.8 mm, 0.9 mm, 1 mm, or the like. Certainly, k may also be other numerical values in the range of 0.7 mm and 1 mm. The enumeration of details shall be eschewed henceforth.

In some embodiments of the present disclosure, referring to FIG. 2, FIG. 4, and FIG. 6, the second side surface 2 has two connection piece recesses 21 located at two ends of the buffer recess 11, respectively. In this way, the connection piece region is offset from a liquid injection buffer region, which is beneficial to reasonably utilizing a space. Moreover, the two connection piece recesses 21 facilitate a connection between the plastic component 10 and the two connection pieces. The recessed structure of the buffer recess 11 enhances a mechanical strength of a middle region of the body to some extent. Moreover, the recessed structure of the connection piece recess 21 strengthens a mechanical strength of regions at the two ends of the body to some extent.

In some embodiments of the present disclosure, referring to FIG. 2 and FIG. 7, the body has a predetermined thickness. The first side surface 1 is connected to the second side surface 2 through an outer peripheral surface 3, and the second side surface 2 has a thinned recess 22 having an outer peripheral recess wall 221 and a recess bottom wall 222. The outer peripheral recess wall 221 is apart from the outer peripheral surface 3, and the connection piece recess 21 is formed at the recess bottom wall 222. By defining the thinned recess 22, a mechanical strength of the second side surface 2 of the body may be enhanced to some extent. The thinned recess 22 may also be used as a hot melting region of a polyester film Mylar. In some embodiments, a top of the polyester film Mylar is disposed in the thinned recess 22, and a connection between the polyester film Mylar and the body is realized through a hot melting process.

In some embodiments of the present disclosure, a distance between the outer peripheral recess wall 221 and the outer peripheral surface 3 is smaller than or equal to 10 mm, thus ensuring a high strength of the body, while avoiding a decrease in strength caused by a thin edge of the body. Referring to FIG. 7, the distance between the outer peripheral recess wall 221 and the outer peripheral surface 3 is j, and j is smaller than or equal to 10 mm. Exemplarily, j may be 2 mm, 4 mm, 5 mm, 6 mm, 10 mm, or the like. Certainly, j may also be other numerical values smaller than 10 mm, which are not listed here.

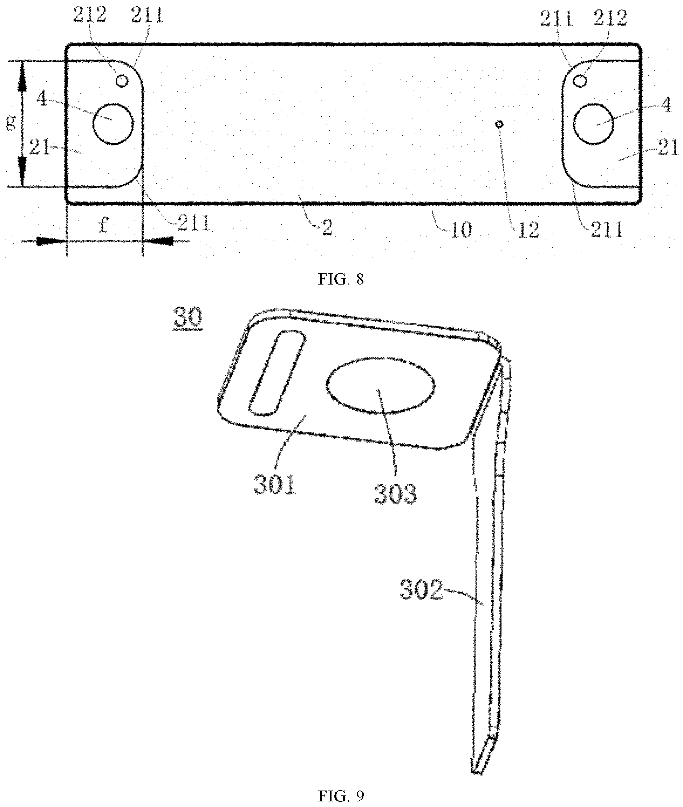

According to some embodiments of the present disclosure, referring to FIG. 8, the connection piece recess 21 is provided with a positioning protruding post 212 protruding towards away from the first side surface 1. The positioning protruding post 212 has an end surface flush with the recess bottom wall 222 of the thinned recess 22. The positioning protruding post 212 is offset from the pole through hole 4 and may position the connection piece. For example, the connection piece has a positioning hole, and the positioning protruding post 212 is inserted into the positioning hole. Therefore, positioning of the connection piece in the connection piece recess 21 is realized, thereby facilitating welding and fixing of the connection piece and the pole in the pole through hole 4.

In some embodiments of the present disclosure, the body is of a flat plate-like structure and has a length greater than or equal to 300 mm and a width greater than or equal to 107 mm. In this way, it can be guaranteed that the body is matched with the corresponding battery, preventing any negative impact on normal use of the body due to its size being too small. Moreover, the thickness of the body is greater than or equal to 4 mm, which may ensure that the strength of the body is excessively reduced because the thickness of the body is too thin. In some embodiments, referring to FIG. 3 to FIG. 5, the length of the body is *a,* where *a* is greater than or equal to 300 mm, a width of the body is *b,* where *b* is greater than or equal to 107 mm, and the thickness of the body is c, where c is greater than or equal to 4 mm. Exemplarily, *a* may be 300 mm, 310 mm, 320 mm, 330 mm, 340 mm, etc., *b* may be 107 mm, 110 mm, 113 mm, 116 mm, 119 mm, etc., c may be 4 mm, 6 mm, 8 mm, 10 mm, 12 mm, etc. Of course, *a, b,* and c may also be other numerical values greater than their respective lower limit values, which are not exhaustively listed herein.

In some embodiments of the present disclosure, the thickness of the body is smaller than or equal to 30 mm, which may ensure that the body is thin, thus saving materials. The thin body is beneficial to improving injection molding efficiency of the plastic component 10, as well as increasing a success rate of forming the plastic component 10.

In some embodiments of the present disclosure, a length of the buffer recess 11 is greater than or equal to 285 mm, a width of the buffer recess 11 is greater than or equal to 100 mm, and a depth of the buffer recess 11 is greater than or equal to 2.5 mm. In this way, it can be ensured that the buffer recess 11 is matched with the corresponding battery, with a great region and sufficient depth. The buffer recess 11 can well buffer the liquid during liquid injection, avoiding a case where a dimension of the buffer recess 11 is too small and affects a buffer effect on the liquid during injection, such as liquid overflow. In some embodiments, referring to FIG. 3 to FIG. 5, the length of the buffer recess 11 is *d,* where *d* is greater than or equal to 285 mm. The width of the buffer recess 11 is e, where e is greater than or equal to 100 mm. The depth of the buffer recess 11 is *i,* and *i* is greater than or equal to 2.5 mm. Exemplarily, *d* may be 2 mm, 4 mm, 5 mm, 6 mm, 10 mm, etc., e may be 100 mm, 104 mm, 108 mm, 112 mm, 116 mm, etc., and *i* may be 2.5 mm, 2.7 mm, 2.9 mm, 3.1 mm, 3.3 mm, etc. Certainly, *d, e,* and *i* may also be other numerical values greater than their respective lower limit values, which will not be exhaustively listed here.

In some embodiments of the present disclosure, a dimension of the connection piece recess 21 in a length direction of the body is greater than or equal to 50 mm, a dimension of the connection piece recess 21 in a width direction of the body is greater than or equal to 86 mm, and a depth of the connection piece recess 21 is greater than or equal to 2.5 mm. In this way, it can be ensured that the connection piece recess 21 is matched with the corresponding battery, with the great region and sufficient depth, thereby lowering a connection difficulty when the connection piece recess 21 is connected to the connection piece. In some embodiments, referring to FIG. 5 and FIG. 6, the dimension of the connection piece recess 21 in the length direction of the body is *f,* where *f* is greater than or equal to 50 mm. The dimension of the connection piece recess 21 in the width direction of the body is g, where g is greater than or equal to 86 mm. The depth of the connection piece recess 21 is *h,* and *h* is greater than or equal to 2.5 mm. Exemplarily, *f* may be 50 mm, 52 mm, 54 mm, 56 mm, 58 mm, and so on. Similarly, g may be 86 mm, 88 mm, 90 mm, 92 mm, 94 mm, and so forth. Likewise, *h* may be 2.5 mm, 2.7 mm, 2.9 mm, 3.1 mm, 3.3 mm, etc. Certainly, *f, g,* and *h* may also exceed their respective lower limit values, which will not enumerate all possible values for *f, g,* and *h* herein.

In some embodiments of the present disclosure, referring to FIG. 6, the connection piece recess 21 has a rounded corner 211 arranged at a side of the connection piece recess 21 close to the buffer recess 11 is a rounded corner 211. A fillet radius of the rounded corner 211 is greater than 5 mm and smaller than 20 mm, i.e., a fillet radius of the rounded corner 211 is in a range of 5 mm to 20 mm. A fillet size of the rounded corner 211 matches an outer dimension of the connection piece, allowing the rounded corner 211 to perform position restriction on the connection piece. In addition, compared with a right angle, a structure of the rounded corner 211 may also alleviate a stress concentration phenomenon at the corner of the connection piece recess 21, avoiding fracture of the plastic component 10. Exemplarily, the fillet radius of the rounded corner 211 may be 5 mm, 10 mm, 15 mm, 20 mm, etc. Of course, the fillet radius of the rounded corner 211 may also be any other value in the range of 5 mm and 20 mm, without listing them individually here.

In some embodiments of the present disclosure, the body may further have a liquid return hole penetrating the body in the thickness direction of the body, allowing the electrolyte at a top of the body to flow back through the liquid return hole when the battery is inverted.

According to another aspect of the embodiments of the present disclosure, a battery includes the plastic component 10 according to the above embodiments.

For the battery according to the embodiments of the present disclosure, the plastic component 10 included by the battery resolves technical barriers associated with injection molding difficulties caused by excessive thickness in a large-sized plastic component 10. Moreover, mechanical structures of the plastic component 10 like the buffer recess 11 and the connection piece recess 21 are provided at a plurality of positions of the plastic component 10, thereby allowing feasibility of the large-sized plastic component 10 to be realized. In addition, the thinned design of the buffer recess 11 and the connection piece recess 21 saves the material required for molding the plastic component 10 and cooling time required for injection molding, thus lowering most of the cost. Moreover, the buffer recess 11 is added on the plastic component 10 to serve as an electrolyte buffer region, which addresses a technical challenge of bare cell damage due to excessive hydraulic pressure during rapid infusion in a large-sized battery cell. Moreover, the connection piece recess 21 is added to the plastic component 10 to serve as a connection piece connecting region, which solves the technical problem of a great thickness of the connection piece after the connection piece is connected to the plastic component 10.

In some embodiments of the present disclosure, as illustrated in FIG. 1, FIG. 2, and FIG. 10, the battery further includes a cover plate 20. The cover plate 20 is located at a side of a first side surface 1 of the plastic component and has a liquid injection hole 201. A projection of the liquid injection hole 201 on the first side surface 1 is located at a buffer recess 11, and a flow guide hole 12 is offset from the liquid injection hole 201. In this way, after the electrolyte enters the buffer recess 11 from the liquid injection hole 201, the electrolyte may be fully buffered in the buffer recess 11, and then enter the battery from the flow guide hole 12, thereby reducing an impact force of the electrolyte on an interior of the battery and allowing the liquid injection process to be more stable. As illustrated in FIG. 1 to FIG. 3 and FIG. 6, the flow guide hole 12 is located at the buffer recess 11 and is close to the connection piece recess 21 at a right end. Certainly, in some embodiments not illustrated in the drawings, the flow guide hole 12 may be located at the buffer recess 11 and close to the connection piece recess 21 at a left end, or the flow guide hole 12 may be located at a center position of the buffer recess 11.

In some embodiments of the present disclosure, as illustrated in FIG. 1 and FIG. 2, FIG. 9 and FIG. 10, the battery further includes a connection piece 30 and a pole. The pole passes through the pole through hole 4. The connection piece 30 is located at a side of a second side surface 2 of the plastic component 10 and includes a pole connection segment 301 and a tab connection segment 302. The pole connection segment 301 is directly connected to the tab connection segment 302, or the pole connection segment 301 is indirectly connected to the tab connection segment 302 through a middle connection segment. The pole connection segment 301 is located at a connection piece recess 21 and fixedly connected to the pole. The tab connection segment 302 extends away from the plastic component 10, and an angle between the tab connection segment 302 and the pole connection segment 301 is greater than 70° and smaller than 110°. The tab connection segment 302 is adapted to be connected to other parts of the battery (for example, the tab 401 of the bare cell 40 mentioned below), and the tab connection segment 302 and the pole connection segment 301 are located at different planes, which facilitates an arrangement of the tab connection segment 302 at a position convenient for a connection operation, and decreases a lateral size of the battery (i.e., a dimension of the battery in a F1- F2 direction). Exemplarily, the angle between the tab connection segment 302 and the pole connection segment 301 is 90°, i.e., the tab connection segment 302 is perpendicular to the pole connection segment 301.

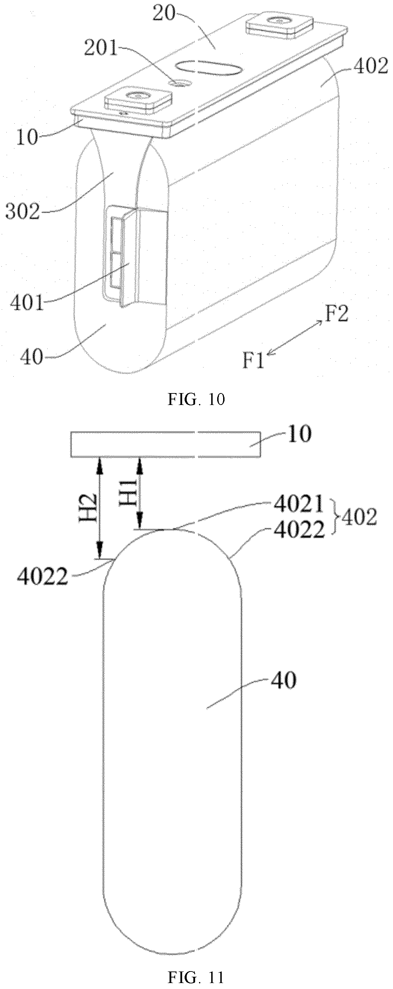

In some embodiments of the present disclosure, as illustrated in FIG. 1 and FIG. 2, FIG. 9 and FIG. 10, the battery further includes at least one bare cell 40 provided at a side of the pole connection segment 301 facing away from the plastic component 10. A longitudinal extending direction of the bare cell 40 is consistent with a length direction of the body. A longitudinal end of the bare cell 40 is a tab 401, and the tab 401 is connected to the tab connection segment 302. The length direction of the body is the F1- F2 direction illustrated in FIG. 10, and the longitudinal extending direction of the bare cell 40 is consistent with the length direction of the body, allowing a distance between a great surface of the bare cell 40 and the flow guide hole 12 on the body to be small. In this way, when the electrolyte enters the battery through the flow guide hole 12, the electrolyte may be in contact with the great surface of the bare cell 40 more effectively and quickly, thus facilitating faster immersion of the bare cell 40 and shortening the idle time. In addition, the tab 401 is located at a side surface, which is convenient for a connection between the tab 401 and the tab connection segment 302.

FIG. 11 is a schematic diagram of a relative position of a bare cell 40 and a plastic component 10 in a cross-section perpendicular to the F1-F2 direction in FIG. 10. In some embodiments of the present disclosure, as illustrated in FIG. 1 and FIG. 2, FIG. 10 and FIG. 11, the bare cell 40 has a protrusion 402 protruding towards the plastic component 10. The protrusion 402 includes a proximal portion 4021 close to the plastic component 10 and a distal portion 4022 away from the plastic component 10. A distance between the distal portion 4022 and the plastic component 10 is greater than the distance between the proximal portion 4021 and the plastic component 10. As illustrated in FIG. 11, the distance between the proximal portion 4021 and the plastic component 10 is H1, the distance between the distal portion 4022 and the plastic component 10 is H2, and H2 >H1. The proximal portion 4021 is the nearest position of the bare cell 40 from the plastic component 10, which is the highest point of the bare cell 40. A predetermined space is defined between the protrusion 402 and the plastic component 10, which may reduce obstruction of the electrolyte when passing through the space, and facilitate downward flow and diffusion of the electrolyte.

In an example, an outer surface of the protrusion 402 may be configured as a semi-cylindrical surface, such that the proximal portion 4021 is a busbar of the semi-cylindrical surface.

In some embodiments, the projection of the flow guide hole 12 on the protrusion 402 is located at the distal portion 4022. In this way, when the electrolyte enters the interior of the battery through the flow guide hole 12, the electrolyte directly drops on the distal portion 4022 instead of the proximal portion 4021, and the distal portion 4022 can guide the electrolyte faster to a side surface space of the bare cell 40.

Alternatively, in other embodiments, the flow guide hole 12 is offset from the protrusion 402, i.e., the flow guide hole 12 directly faces towards the side surface space of the bare cell 40, and the electrolyte may directly enter the side surface space of the bare cell 40 through the flow guide hole 12.

In some embodiments of the present disclosure, provided is a plurality of flow guide holes 12, i.e., the buffer recess 11 internally has a plurality of flow guide holes 12 penetrating the body in a thickness direction of the body, and two sides of the proximal portion have the plurality of flow guide holes 12. The plurality of flow guide holes 12 may disperse the electrolyte, thereby reducing an impact force on the bare cell 40 and improving the liquid injection efficiency of the battery. In addition, a wetting speed of the electrolyte on the bare cell 40 is enhanced, and the idle time is reduced.

In an example, two flow guide holes 12 are provided and disposed on the distal portions 4022 at two sides of the proximal portion 4021, respectively. Alternatively, in another example, the two flow guide holes 12 may be provided and disposed at two sides of the bare cell 40, respectively.

In other embodiments of the present disclosure, one flow guide hole 12 is provided.

In some embodiments of the present disclosure, there is a plurality of bare cells 40, i.e., the battery includes a plurality of bare cells 40, and a flow guide hole 12 is located at a center line between two adjacent bare cells 40. In this way, a space below the flow guide hole 12 is great, and the obstruction to the electrolyte may be decreased.

In descriptions of this specification, descriptions in the reference terms "an embodiment", "some embodiments", "example", "specific example", "some examples" or the like mean that the specific features, structures, materials or characteristics described in combination with the embodiments or the examples are included in at least one embodiment or example of the present disclosure. In the present specification, the schematic representation of the above terms does not necessarily mean the same embodiment or example. Moreover, the described specific features, structures, materials or characteristics may be combined in any one or more embodiments or examples in a suitable mode. In addition, various embodiments or examples described in the specification, as well as features of various embodiments or examples, may be combined by those skilled in the art.

Although the embodiments of the present disclosure have been shown and described above, it can be understood that the above-mentioned embodiments are exemplary and should not be construed as limiting the present disclosure. Those of ordinary skill in the art can make changes, modifications, substitutions and modifications to the above-mentioned embodiments within the scope of the present invention as set out in the appended claims.

## Claims

1. A plastic component, comprising a body having a first side surface (1) and a second side surface (2) facing away from the first side surface (1), the first side surface (1) having a buffer recess (11) recessed towards the second side surface (2), the buffer recess (11) having at least one flow guide hole (12) penetrating the body in a thickness direction of the body, the second side surface (2) having at least one connection piece recess (21) recessed towards the first side surface (1), wherein each of the at least one connection piece recess (21) is configured such that a connection piece (30) of a battery can be at least partially installed and positioned in the connection piece recess (21), the connection piece (30) being connectable to a pole of the battery and at least one bare cell (40) of the battery, and wherein the connection piece recess (21) has a pole through hole (4) penetrating the body in the thickness direction of the body,
wherein a projection region of the connection piece recess (21) on the body and a projection region of the buffer recess (11) on the body are offset from each other,
**characterized in that** an offset between the projection region of the connection piece recess (21) on the body and the projection region of the buffer recess (11) on the body is greater than 0.7 mm and smaller than 1 mm.

2. The plastic component according to claim 1, wherein the second side surface (2) has two connection piece recesses (21) located at two ends of the buffer recess (11), respectively.

3. The plastic component according to claim 1 or 2, wherein:
the first side surface (1) is connected to the second side surface (2) through an outer peripheral surface (3); and
the second side surface (2) has a thinned recess (22) having an outer peripheral recess wall (221) and a recess bottom wall (222), the outer peripheral recess wall (221) being apart from the outer peripheral surface (3), and the connection piece recess (21) being formed at the recess bottom wall (222),
optionally, a distance between the outer peripheral recess wall (221) and the outer peripheral surface (3) is smaller than or equal to 10 mm.

4. The plastic component according to claim 3, wherein the connection piece recess (21) is provided with a positioning protruding post (212) protruding away from the first side surface (1), the positioning protruding post (212) having an end surface flush with the recess bottom wall (222) of the thinned recess (22).

5. The plastic component according to any one of claims 1 to 4, wherein the body is of a flat plate-like structure, and has a length greater than or equal to 300 mm, a width greater than or equal to 107 mm, and a thickness greater than or equal to 4 mm,
optionally, the thickness of the body is smaller than or equal to 30 mm.

6. The plastic component according to any one of claims 1 to 5, wherein the buffer recess (11) has a length greater than or equal to 285 mm, a width greater than or equal to 100 mm, and a depth greater than or equal to 2.5 mm,
optionally, a dimension of the connection piece recess (21) in a length direction of the body is greater than or equal to 50 mm;
a dimension of the connection piece recess (21) in a width direction of the body is greater than or equal to 86 mm; and
a depth of the connection piece recess (21) is greater than or equal to 2.5 mm.

7. The plastic component according to any one of claims 1 to 6, wherein the connection piece recess (21) has a rounded corner (211) arranged at a side of the connection piece recess (21) close to the buffer recess (11), a fillet radius of the rounded corner (211) being greater than 5mm and smaller than 20 mm.

8. The plastic component according to any one of claims 1 to 7, wherein the connection piece recess (21) has a first side wall close to the buffer recess (11) and a second side wall away from the buffer recess (11), a distance between the pole through hole (4) and the second side wall being greater than a distance between the pole through hole (4) and the first side wall.

9. A battery, comprising the plastic component according to any one of claims 1 to 8.

10. The battery according to claim 9, further comprising a cover plate (20) located at a side of the first side surface (1) of the plastic component and having a liquid injection hole (201), a projection of the liquid injection hole (201) on the first side surface (1) being located at the buffer recess (11), and the flow guide hole (12) being offset from the liquid injection hole (201).

11. The battery according to claim 9 or 10, wherein the pole passes through the pole through hole (4), the connection piece (30) being located at a side of the second side surface (2) of the plastic component and comprising a pole connection segment (301) and a tab connection segment (302) connected to the pole connection segment (301), the pole connection segment (301) being located at the connection piece recess (21) and fixedly connected to the pole, the tab connection segment (302) extending away from the plastic component, and an angle between the tab connection segment (302) and the pole connection segment (301) being greater than 70° and smaller than 110°.

12. The battery according to claim 11, wherein the at least one bare cell (40) are arranged at a side of the pole connection segment (301) facing away from the plastic component, a longitudinal extending direction of the bare cell (40) being consistent with a length direction of the body, and a longitudinal end of the bare cell (40) being a tab (401) connected to the tab connection segment (302),
optionally, the bare cell (40) has a protrusion (402) protruding towards the plastic component, the protrusion (402) comprising a proximal portion close to the plastic component and a distal portion away from the plastic component, a distance between the distal portion and the plastic component being greater than a distance between the proximal portion and the plastic component, and a projection of the flow guide hole (12) on the protrusion (402) being located at the distal portion, or the flow guide hole (12) being offset from the protrusion (402).

13. The battery according to claim 12, wherein the buffer recess (11) internally has a plurality of flow guide holes (12) penetrating the body in a thickness direction of the body and being formed at two sides of the proximal portion,
optionally, the at least one bare cell (40) comprises a plurality of bare cells (40), a flow guide hole (12) being located at a center line between two adjacent bare cells (40).

## Patentansprüche

1. Kunststoffbauteil, umfassend einen Körper mit einer ersten Seitenfläche (1) und einer zweiten Seitenfläche (2), die von der ersten Seitenfläche (1) abgewandt ist, wobei die erste Seitenfläche (1) eine Pufferaussparung (11) aufweist, die zur zweiten Seitenfläche (2) hin vertieft ist, wobei die Pufferaussparung (11) mindestens eine Strömungsführungsbohrung (12) aufweist, die den Körper in einer Dickenrichtung des Körpers durchdringt, wobei die zweite Seitenfläche (2) mindestens eine Anschlussstückaussparung (21) aufweist, die zur ersten Seitenfläche (1) hin vertieft ist, wobei jede der mindestens einen Anschlussstückaussparungen (21) so gestaltet ist, dass ein Anschlussstück (30) einer Batterie mindestens teilweise in der Anschlussstückaussparung (21) installiert und positioniert werden kann, wobei das Anschlussstück (30) mit einem Pol der Batterie und mindestens einer nackten Zelle (40) der Batterie verbindbar ist, und wobei die Anschlussstückaussparung (21) eine Poldurchgangsbohrung (4) aufweist, die den Körper in der Dickenrichtung des Körpers durchdringt,
wobei ein Projektionsbereich der Anschlussstückaussparung (21) auf dem Körper und ein Projektionsbereich der Pufferaussparung (11) auf dem Körper gegeneinander versetzt sind,
**dadurch gekennzeichnet, dass** ein Versatz zwischen dem Projektionsbereich der Anschlussstückaussparung (21) auf dem Körper und dem Projektionsbereich der Pufferaussparung (11) auf dem Körper größer als 0,7 mm und kleiner als 1 mm ist.

2. Kunststoffbauteil nach Anspruch 1, wobei die zweite Seitenfläche (2) zwei Anschlussstückaussparungen (21) aufweist, die jeweils an zwei Enden der Pufferaussparung (11) angeordnet sind.

3. Kunststoffbauteil nach Anspruch 1 oder 2, wobei:
die erste Seitenfläche (1) mit der zweiten Seitenfläche (2) durch eine Außenumfangsfläche (3) verbunden ist; und
die zweite Seitenfläche (2) eine ausgedünnte Aussparung (22) mit einer Außenumfangsaussparungswand (221) und einer Aussparungsbodenwand (222) hat, wobei die Außenumfangsaussparungswand (221) von der Außenumfangsfläche (3) beabstandet ist, und die Anschlussstückaussparung (21) an der Aussparungsbodenwand (222) ausgebildet ist,
wobei wahlweise ein Abstand zwischen der Außenumfangsaussparungswand (221) und der Außenumfangsfläche (3) kleiner oder gleich 10 mm ist.

4. Kunststoffbauteil nach Anspruch 3, wobei die Anschlussstückaussparung (21) mit einem Positionierungsvorsprungspfosten (212) versehen ist, der von der ersten Seitenfläche (1) weg vorsteht, wobei der Positionierungsvorsprungspfosten (212) eine Endfläche aufweist, die bündig mit der Aussparungsbodenwand (222) der ausgedünnten Aussparung (22) ist.

5. Kunststoffbauteil nach einem der Ansprüche 1 bis 4, wobei der Körper eine flache plattenartige Struktur aufweist und eine Länge von mindestens 300 mm, eine Breite von mindestens 107 mm und eine Dicke von mindestens 4 mm hat,
wobei wahlweise die Dicke des Körpers kleiner oder gleich 30 mm ist.

6. Kunststoffbauteil nach einem der Ansprüche 1 bis 5, wobei die Pufferaussparung (11) eine Länge von mindestens 285 mm, eine Breite von mindestens 100 mm und eine Tiefe von mindestens 2,5 mm hat,
wobei wahlweise eine Abmessung der Anschlussstückaussparung (21) in einer Längsrichtung des Körpers größer oder gleich 50 mm ist;
wobei eine Abmessung der Anschlussstückaussparung (21) in einer Breitenrichtung des Körpers größer oder gleich 86 mm ist; und
wobei eine Tiefe der Anschlussstückaussparung (21) größer oder gleich 2,5 mm ist.

7. Kunststoffbauteil nach einem der Ansprüche 1 bis 6, wobei die Anschlussstückaussparung (21) eine abgerundete Ecke (211) aufweist, die an einer Seite der Anschlussstückaussparung (21) in der Nähe der Pufferaussparung (11) angeordnet ist, wobei der Ausrundungsradius der abgerundeten Ecke (211) größer als 5 mm und kleiner als 20 mm ist.

8. Kunststoffbauteil nach einem der Ansprüche 1 bis 7, wobei die Anschlussstückaussparung (21) eine erste Seitenwand in der Nähe der Pufferaussparung (11) und eine zweite Seitenwand, die von der Pufferaussparung (11) abgewandt ist, aufweist, wobei ein Abstand zwischen der Poldurchgangsbohrung (4) und der zweiten Seitenwand größer ist als ein Abstand zwischen der Poldurchgangsbohrung (4) und der ersten Seitenwand.

9. Batterie, umfassend das Kunststoffbauteil nach einem der Ansprüche 1 bis 8.

10. Batterie nach Anspruch 9, ferner umfassend eine Abdeckplatte (20), die an einer Seite der ersten Seitenfläche (1) des Kunststoffbauteils angeordnet ist und eine Flüssigkeitseinfüllöffnung (201) aufweist, wobei eine Projektion der Flüssigkeitseinfüllöffnung (201) auf der ersten Seitenfläche (1) in der Pufferaussparung (11) liegt und die Strömungsführungsbohrung (12) gegenüber der Flüssigkeitseinfüllöffnung (201) versetzt ist.

11. Batterie nach Anspruch 9 oder 10, wobei der Pol durch die Poldurchgangsbohrung (4) verläuft, wobei das Anschlussstück (30) auf einer Seite der zweiten Seitenfläche (2) des Kunststoffbauteils angeordnet ist und einen Polverbindungsabschnitt (301) sowie einen mit dem Polverbindungsabschnitt (301) verbundenen Laschenverbindungsabschnitt (302) aufweist, wobei der Polverbindungsabschnitt (301) an der Anschlussstückaussparung (21) angeordnet und fest mit dem Pol verbunden ist, wobei sich der Laschenverbindungsabschnitt (302) vom Kunststoffbauteil weg erstreckt, und ein Winkel zwischen dem Laschenverbindungsabschnitt (302) und dem Polverbindungsabschnitt (301) größer als 70° und kleiner als 110° ist.

12. Batterie nach Anspruch 11, wobei die mindestens eine Nacktzelle (40) auf einer Seite des Polverbindungsabschnitts (301) angeordnet ist, die von dem Kunststoffbauteil abgewandt ist, wobei die längs verlaufende Richtung der nackten Zelle (40) mit einer Längsrichtung des Körpers übereinstimmt und ein Längsende der Nacktzelle (40) eine Lasche (401) ist, die mit dem Laschenverbindungsabschnitt (302) verbunden ist,
wobei wahlweise die nackte Zelle (40) einen in Richtung des Kunststoffbauteils vorstehenden Vorsprung (402) aufweist, wobei der Vorsprung (402) einen nahe am Kunststoffbauteil gelegenen proximalen Abschnitt und einen vom Kunststoffbauteil abgewandten distalen Abschnitt umfasst, wobei ein Abstand zwischen dem distalen Abschnitt und dem Kunststoffbauteil größer ist als ein Abstand zwischen dem proximalen Abschnitt und dem Kunststoffbauteil und wobei eine Projektion der Strömungsführungsbohrung (12) auf den Vorsprung (402) am distalen Abschnitt angeordnet ist oder die Strömungsführungsbohrung (12) vom Vorsprung (402) versetzt ist.

13. Batterie nach Anspruch 12, wobei die Pufferaussparung (11) im Inneren eine Vielzahl von Strömungsführungsbohrungen (12) aufweist, die den Körper in einer Dickenrichtung des Körpers durchdringen und an zwei Seiten des proximalen Abschnitts ausgebildet sind,
wahlweise die wenigstens eine Nacktzelle (40) mehrere nackte Zelle (40) umfasst, wobei sich eine Strömungsführungsbohrung (12) auf einer Mittellinie zwischen zwei benachbarten nackten Zellen (40) befindet.

## Revendications

1. Un composant plastique, comprenant un corps ayant une première surface latérale (1) et une seconde surface latérale (2) tournée à l'opposé de la première surface latérale (1), la première surface latérale (1) comportant un évidement tampon (11) en retrait vers la seconde surface latérale (2), l'évidement tampon (11) comportant au moins un trou de guidage de flux (12) traversant le corps dans la direction de l'épaisseur du corps, la seconde surface latérale (2) comportant au moins un évidement de pièce de connexion (21) en retrait vers la première surface latérale (1), dans lequel chacun des au moins un évidement de pièce de connexion (21) est configuré de telle sorte qu'une pièce de connexion (30) d'une batterie puisse être au moins partiellement installée et positionnée dans l'évidement de pièce de connexion (21), la pièce de connexion (30) étant apte à être connectée à un pôle de la batterie et à au moins une cellule nue (40) de la batterie, et dans lequel l'évidement de pièce de connexion (21) comporte un trou traversant de pôle (4) traversant le corps dans la direction de l'épaisseur du corps,
dans lequel une région de projection de l'évidement de pièce de connexion (21) sur le corps et une région de projection de l'évidement tampon (11) sur le corps sont décalées l'une par rapport à l'autre,
**caractérisé en ce qu'**un décalage entre la région de projection de l'évidement de pièce de connexion (21) sur le corps et la région de projection de l'évidement tampon (11) sur le corps est supérieur à 0,7 mm et inférieur à 1 mm.

2. Le composant plastique selon la revendication 1, dans lequel la seconde surface latérale (2) comporte deux évidements de pièce de connexion (21) situés aux deux extrémités de l'évidement tampon (11), respectivement.

3. Le composant plastique selon la revendication 1 ou 2, dans lequel :
la première surface latérale (1) est connectée à la seconde surface latérale (2) par l'intermédiaire d'une surface périphérique extérieure (3) ; et
la seconde surface latérale (2) comporte un évidement aminci (22) ayant une paroi d'évidement périphérique extérieure (221) et une paroi du fond de l'évidement (222), la paroi d'évidement périphérique extérieure (221) étant éloignée de la surface périphérique extérieure (3), et l'évidement de pièce de connexion (21) étant formé au niveau de la paroi du fond de l'évidement (222),
facultativement, une distance entre la paroi d'évidement périphérique extérieure (221) et la surface périphérique extérieure (3) est inférieure ou égale à 10 mm.

4. Le composant plastique selon la revendication 3, dans lequel l'évidement de pièce de connexion (21) est pourvu d'un montant saillant de positionnement (212) faisant saillie à l'opposé de la première surface latérale (1), le montant saillant de positionnement (212) ayant une surface d'extrémité affleurant la paroi du fond de l'évidement (222) de l'évidement aminci (22).

5. Le composant plastique selon l'une quelconque des revendications 1 à 4, dans lequel le corps présente une structure en forme de plaque plate, et a une longueur supérieure ou égale à 300 mm, une largeur supérieure ou égale à 107 mm, et une épaisseur supérieure ou égale à 4 mm,
facultativement, l'épaisseur du corps est inférieure ou égale à 30 mm.

6. Le composant plastique selon l'une quelconque des revendications 1 à 5, dans lequel l'évidement tampon (11) a une longueur supérieure ou égale à 285 mm, une largeur supérieure ou égale à 100 mm, et une profondeur supérieure ou égale à 2,5 mm,
facultativement, une dimension de l'évidement de pièce de connexion (21) dans une direction de la longueur du corps est supérieure ou égale à 50 mm ;
une dimension de l'évidement de pièce de connexion (21) dans une direction de la largeur du corps est supérieure ou égale à 86 mm ; et
une profondeur de l'évidement de pièce de connexion (21) est supérieure ou égale à 2,5 mm.

7. Le composant plastique selon l'une quelconque des revLe composant plastique selon l'une quelconque des revendications 1 à 6, dans lequel l'évidement de pièce de connexion (21) comporte un coin arrondi (211) agencé sur un côté de l'évidement de pièce de connexion (21) proche de l'évidement tampon (11), un rayon de congé du coin arrondi (211) étant supérieur à 5 mm et inférieur à 20 mm.

8. Le composant plastique selon l'une quelconque des revendications 1 à 7, dans lequel l'évidement de pièce de connexion (21) comporte une première paroi latérale proche de l'évidement tampon (11) et une seconde paroi latérale éloignée de l'évidement tampon (11), une distance entre le trou traversant de pôle (4) et la seconde paroi latérale étant supérieure à une distance entre le trou traversant de pôle (4) et la première paroi latérale.

9. Une batterie, comprenant le composant plastique selon l'une quelconque des revendications 1 à 8.

10. La batterie selon la revendication 9, comprenant en outre une plaque de recouvrement (20) située sur un côté de la première surface latérale (1) du composant plastique et comportant un trou d'injection de liquide (201), une projection du trou d'injection de liquide (201) sur la première surface latérale (1) étant située au niveau de l'évidement tampon (11), et le trou de guidage de flux (12) étant décalé du trou d'injection de liquide (201).

11. La batterie selon la revendication 9 ou 10, dans laquelle le pôle traverse le trou traversant de pôle (4), la pièce de connexion (30) étant située sur un côté de la seconde surface latérale (2) du composant plastique et comportant un segment de connexion de pôle (301) et un segment de connexion de languette (302) connecté au segment de connexion de pôle (301), le segment de connexion de pôle (301) étant situé au niveau de l'évidement de pièce de connexion (21) et connecté de manière fixe au pôle, le segment de connexion de languette (302) s'étendant à l'écart du composant plastique, et un angle entre le segment de connexion de languette (302) et le segment de connexion de pôle (301) étant supérieur à 70° et inférieur à 110°.

12. La batterie selon la revendication 11, dans laquelle la au moins une cellule nue (40) est agencée sur un côté du segment de connexion de pôle (301) tourné à l'opposé du composant plastique, une direction d'extension longitudinale de la cellule nue (40) étant cohérente avec une direction de la longueur du corps, et une extrémité longitudinale de la cellule nue (40) étant une languette (401) connectée au segment de connexion de languette (302),
facultativement, la cellule nue (40) présente une saillie (402) faisant saillie vers le composant plastique, la saillie (402) comportant une partie proximale proche du composant plastique et une partie distale éloignée du composant plastique, une distance entre la partie distale et le composant plastique étant supérieure à une distance entre la partie proximale et le composant plastique, et une projection du trou de guidage de flux (12) sur la saillie (402) étant située au niveau de la partie distale, ou le trou de guidage de flux (12) étant décalé de la saillie (402).

13. La batterie selon la revendication 12, dans laquelle l'évidement tampon (11) comporte intérieurement une pluralité de trous de guidage de flux (12) traversant le corps dans une direction de l'épaisseur du corps et étant formés sur deux côtés de la partie proximale,
facultativement, la au moins une cellule nue (40) comprend une pluralité de cellules nues (40), un trou de guidage de flux (12) étant situé sur une ligne médiane entre deux cellules nues (40) adjacentes.
